# EUROPEAN PATENT APPLICATION

(11) **EP 3 741 798 A1**
(43) Date of publication of application: **25.11.2020**
(21) Application number: 20175001.5
(22) Date of filing: 15.05.2020
(51) Int. Cl.: C08J 5/18, B29B 17/00, C08K 3/04, B29C 43/24

(54) **METHOD FOR PRODUCING A RECYCLED RUBBER SHEET FROM END-OF-LIFE TIRES**

(30) Priority: 22.05.2019 IT 201900007117
(71) Applicant: Ges.Tyre S.C.R.L., 25124 Brescia (IT)
(72) Inventor: RAMORINO, Giorgio, I-25124 BRESCIA (IT)
(74) Representative: Gualeni, Nadia

(57) **Abstract**

A method of production of recycled rubber from end-of-life tires comprises the steps of:
- providing rubber granulate from end-of-life tires (ELTs) with a grain size between 0.1 mm and 2 mm;
- adding carbon nanotubes in a percentage between 0.5% and 10% by weight;
- compacting the rubber granulate with the addition of nanotubes, forcing them to pass through a narrow passage until a sheet of recycled rubber (B) is obtained.

## Description

The present invention relates to a production method of recycled rubber from end-of-life tires (ELTs). The invention also relates to a recycled rubber sheet directly obtained by this method.

Waste originating from the replacement of tires or the demolition of the vehicles on which the tires have been fitted is a precious resource, due to the high quality of the polymers from which they are made, and is able to be reused in production processes with significant environmental, economic and social benefits. Therefore, once the tire has exhausted its primary function - i.e. that of "external coating of vehicle wheels" - it becomes special non-hazardous waste and is classified as an ELT, with the relative EWC code 160103 (European Waste Catalogue), which defines the category according to Directive 75/442/EEC.

If collected and managed correctly, ELTs may therefore become a resource because they contain rubber, steel and textile fibers which, as a result of specific recycling processes, may generate what are known as the second raw materials, these being raw materials derived from various kinds of industrial waste.

Tire recycling operations typically involve a possible cleaning, subsequent bead breaking, i.e. removal of the rim to which the tire is adhered via the metal-core bead, and fragmentation into pieces between 5 and 40 cm in size, known as "chunks." The chunks may be used as a high calorific value fuel, for example in cement works, or further mechanically shredded at ambient temperature to sizes that allow the separation of rubber, steel and textile fiber. The steel is magnetically separated and together with the textile fiber may be usefully recycled. The rubber part of the tire may be further chopped using chemical, physical or mechanical methods to obtain chipped material (20-50 mm), granulate (0.8-20 mm), or powder (<0.8 mm); the types and dimensions are chosen according to the products to be made. However, considering that the granules and powders are made from vulcanized rubber, the variety of end products that may be obtained from them is very limited.

Therefore, to date, most of the rubber that makes up used tires is not reused and ends up as waste for disposal.

There is thus a need in the sector to minimize the waste from used tire waste.

The object of the present invention is to provide a method of recycling the rubber part of the tire.

This is achieved by a method according to claim 1 and by a recycled rubber sheet according to claim 11. The dependent claims describe preferred embodiments of the invention.

The characteristics and advantages of the method according to the present invention will become clear from the description below, given by way of example and without limitation in accordance with the accompanying drawing, in which:

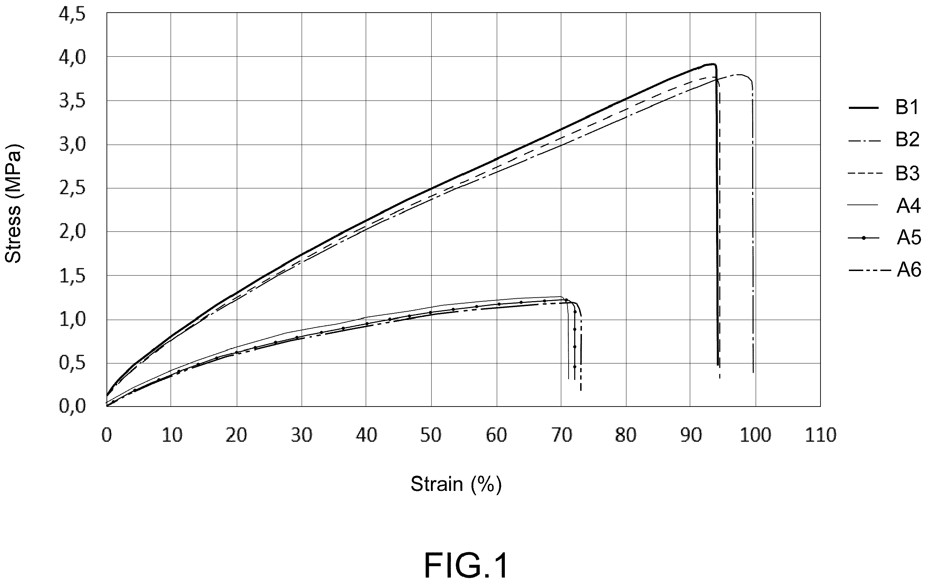

- figure 1 shows a stress-strain graph in which the stress-strain curves of recycled rubber obtained by the method according to the present invention are shown. The method according to the present invention involves the recovery of end-of-life tires (ELTs) for the production of recycled rubber.

The method according to the present invention involves a pre-step of mechanical shredding of the rubber from end-of-life tires (ELTs) to obtain granulate or powder, in particular to obtain rubber granules with a grain size between 0.1 mm - 2 mm. For example, for the production of rubber granulate, there is an initial step of volumetric reduction of the end-of-life tire (ELT) and then a mechanical grinding step at ambient temperature. The material generated is then sieved and cleaned to obtain a perfect separation of the steel and textile fiber from the rubber granulate.

As an alternative to the mechanical shredding pre-step, the method according to the present invention involves the provision (for example purchase or production by methods other than mechanical shredding) of rubber granules from end-of-life tires (ELTs) with a grain size between 0.1 mm - 2 mm.

Preferably, the method according to the present invention comprises a pre-step of compacting the rubber granules to obtain an intermediate product, that is to say a sheet of compacted granules.

This step involves compacting the granules by forcing them to pass through a narrow passage until a sheet of compacted granules is obtained.

Preferably, the step of compacting the granules is a calendering obtained through the use of a calender.

In one exemplary embodiment, the calender comprises a pair of parallel-axis rollers, with adjustable spacing, stacked so as to define a narrow passage between them. The rollers rotate at low speed, preferably in opposite directions, i.e. clockwise for a first roller and anticlockwise for a second roller.

Preferably, the compacting step therefore involves passing the granules between at least a pair of rollers to obtain an intermediate product, i.e. a sheet of compacted granules.

The method according to the present invention then involves a step of adding carbon in allotropic form to the rubber granules.

This step involves the addition of carbon nanotubes, or graphene, or fullerenes.

In particular, the method involves the addition of carbon nanotubes to the rubber granules. Preferably, this step involves the addition of carbon nanotubes in a percentage between 0.5% - 10% by weight.

Carbon nanotubes (CNTs) are one of the allotropic forms of carbon along with graphene and fullerenes. They may be described as hollow cylinders, originating from the folding of a graphene sheet on itself. They have a diameter in the nanometer range, a length that may reach up to 20 cm, and are closed at the ends by a hemispherical portion of fullerene. The body of the nanotube consists of covalently bound carbon atoms, which are hybridized and distributed in a honeycomb fashion.

Nanotubes come in two forms:
- single-walled or SWCNT (Single Walled Carbon Nanotubes), formed by a single sheet of graphene rolled up on itself and with a diameter between 0.4 and 3 nm;
- multi-walled (MWCNT, Multi Walled Carbon Nanotubes), structured as several concentric cylinders arranged at a distance of 2-3 nm and so as to achieve a total diameter of up to 100 nm.

The specific features that characterize carbon nanotubes are:
- mechanical properties, such as high tensile strength, which decreases, however, with increasing imperfections;
- conductive properties, linked to their metallic or semi-metallic nature, and therefore an ability to transmit electricity and heat.

The method according to the present invention involves compacting the rubber granulate with the addition of nanotubes to form a recycled rubber sheet.

Preferably, carbon nanotubes are added to the rubber granules while the granules are compacted, that is to say forced to pass through a narrow passage.

Preferably, this step of adding nanotubes and compacting the rubber granules is a calendering achieved by using a calender.

Preferably, the method involves adding carbon nanotubes directly to the intermediate product, that is to say to the sheet of compacted granules, to obtain a recycled rubber sheet.

Preferably, the nanotubes are added at ambient temperature.

In a variant, the intermediate product, that is to say the sheet of compacted granules, is heated before the nanotubes are added.

Preferably, the carbon nanotubes are added to the intermediate product, that is to say the sheet of compacted granules, during a compacting step.

In particular, the carbon nanotubes are added while the intermediate product, that is to say the sheet of compacted granules, is forced to pass through a narrow passage.

Preferably, this step of compacting the intermediate product, with simultaneous addition of nanotubes, is a calendering obtained through the use of a calender.

Preferably, nanotubes are added slowly, little by little, while the intermediate product is compacted in the calender.

During the calendering of the intermediate product, the nanotubes first stick to the surface of the sheet and then, continuing calendering, homogenize within the sheet thickness until a recycled rubber sheet is produced.

This step therefore involves passing the sheet of compacted granules between at least a pair of rollers and simultaneously adding the carbon nanotubes, to obtain a final product, that is to say a recycled rubber sheet of the desired thickness.

For example, the final product is a recycled rubber sheet with a thickness between 0.5 mm - 6 mm.

The method then involves a cooling step, for example by air, of the final product before it is, for example, wrapped on rolls or sliced into smaller sheets.

The method also involves a possible final step of vulcanizing the recycled rubber sheet, in a special mold, to obtain specific objects.

The intermediate product (A), that is to say the sheet of compacted granules, is opaque, grainy, wrinkled on the surface, and has a low resistance to tearing and ripping.

On the contrary, the final product (B), that is to say the recycled rubber sheet, is black, shiny, compact, elastic, and characterized by low roughness and better resistance to tearing and ripping. This final product is therefore resistant to mechanical stress and suitable for large-scale use.

The tables below show the results of the tensile tests carried out on the intermediate product (A), that is to say on the compacted granule sheet (Table 1), and the results of the tensile tests carried out on the final product (B), that is to say the recycled rubber sheet (Table 2).

**TABLE 1**

| **Sample A** | **Tensile strength (%)** | **Tensile strength (MPa)** | **Modulus (MPa)** |
|---|---|---|---|
| A4 | 70.00 | 1.24 | 5.42 |
| A5 | 71.00 | 1.22 | 5.17 |
| A6 | 72.00 | 1.20 | 5.68 |
| **Mean** | **71.00** | **1.22** | **5.42** |
| Standard deviation | 1.00 | 0.02 | 0.26 |

**TABLE 2**

| **Sample B** | **Tensile strength (%)** | **Tensile strength (MPa)** | **Modulus (MPa)** |
|---|---|---|---|
| B1 | 93.05 | 3.92 | 13.80 |
| B2 | 97.28 | 3.81 | 13.21 |
| B3 | 93.74 | 3.78 | 13.12 |
| **Mean** | **94.69** | **3.84** | **13.38** |
| Standard deviation | 2.27 | 0.07 | 0.37 |

Figure 1 shows a stress-strain graph in which the stress-strain curves relating to samples A1-A3 of intermediate product (A) and the stress-strain curves relating to samples B1-B3 of final product (B) are shown. The figure shows the improved resistance to tearing and ripping of the final product (recycled rubber sheet) compared to the sheet of compacted granules.

This end product may be used to produce, for example, shoe soles, bags, coverings, seals, and carpets.

The object of the present invention is also a sheet of recycled rubber directly obtained by the above method. In particular, the recycled rubber sheet is composed of rubber granules from end-of-life tires (ELTs) and carbon nanotubes.

Preferably, the recycled rubber sheet is composed of rubber granules from end-of-life tires (ELTs) with a grain size between 0.1 mm - 2 mm.

Preferably, the recycled rubber sheet is composed of rubber granules from end-of-life tires (ELTs) and carbon nanotubes in a percentage between 0.5% - 10% by weight. Preferably, the recycled rubber sheet has a tensile strength of more than 2 MPa, preferably more than 3 MPa, even more preferably more than 3.5 MPa.

Preferably, the recycled rubber sheet has a tensile strength between 3 MPa and 4.5 MPa, preferably between 3.5 MPa and 4 MPa.

Innovatively, the production method of recycled rubber from end-of-life tires (ELTs) in accordance with the present invention involves directly mixing the starting materials (carbon nanotubes and rubber granules from end-of-life tires) without having to add chemicals, but simply mixing and compacting them.

The production method of recycled rubber from end-of-life tires (ELTs) in accordance with the present invention makes it possible, on the one hand, to solve a major environmental problem related to the disposal of end-of-life tires and, on the other hand, to obtain a final product that is suitable (due to mechanical, aesthetic and functional characteristics) for multiple reuses.

The production method of recycled rubber from end-of-life tires (ELTs) in accordance with the present invention makes it possible to obtain rubber sheets with different thicknesses and consistencies depending on the percentage by weight of carbon nanotubes inserted in the compound.

The production method of recycled rubber from end-of-life tires (ELTs) in accordance with the present invention makes it possible to obtain an end product suitable for large-scale use, for example for the production of shoe soles, bags, coverings, seals, and carpets.

It is clear that a person skilled in the art could make changes to the method described above without departing from the scope of protection, as defined by the following claims.

## Claims

1. Production method of recycled rubber from end-of-life tires, comprising the steps of:
- providing rubber granulate from end-of-life tires (ELTs) with a grain size between 0.1 mm and 2 mm;
- adding carbon nanotubes in a percentage between 0.5% and 10% by weight;
- compacting the rubber granulate with the addition of nanotubes, forcing them to pass through a narrow passage until a sheet of recycled rubber (B) is obtained.

2. Production method of recycled rubber according to claim 1, wherein the compacting step is a calendering obtained through the use of a calender.

3. Production method of recycled rubber according to claim 1 or 2, wherein carbon nanotubes are added while the rubber granules are compacted.

4. Production method of recycled rubber according to any one of the preceding claims, wherein the nanotubes are added at ambient temperature.

5. Production method of recycled rubber according to any one of the preceding claims, wherein, before the step of adding nanotubes, a pre-step is provided of compacting the rubber granules, forcing them to pass through a narrow passage until a sheet of compacted granules (A) is obtained.

6. Production method of recycled rubber according to claim 5, wherein the pre-step of compacting the granules is a calendering achieved through the use of a calender.

7. Production method of recycled rubber according to claim 5 or 6, wherein the carbon nanotubes are added to the sheet of compacted granules (A) to obtain a sheet of recycled rubber (B).

8. Production method of recycled rubber according to any one of claims 5 to 7, wherein the nanotubes are added slowly, little by little, while the sheet of compacted granules (A) is forced to pass through a narrow passage.

9. Production method of recycled rubber according to any one of the preceding claims, further comprising the step of vulcanizing the recycled rubber sheet.

10. Production method of recycled rubber according to any one of the preceding claims, wherein the recycled rubber sheet (B) has a thickness between 0.5 mm and 6 mm.

11. Recycled rubber sheet (B) consisting of rubber granules from end-of-life tires (ELTs) with a grain size between 0.1 mm and 2 mm, and carbon nanotubes in a percentage between 0.5% and 10% by weight.

12. Recycled rubber sheet (B) according to claim 11, having a tensile strength between 3 MPa and 4.5 MPa, preferably between 3.5 MPa and 4 MPa.
